(19) Europäisches Patentamt
European Patent Office
Office européen des brevets

(11) **EP 4 604 028 A1**

(12) **EUROPEAN PATENT APPLICATION**

(43) Date of publication:
**20.08.2025 Bulletin 2025/34**

(21) Application number: **24158249.3**

(22) Date of filing: **16.02.2024**

(51) International Patent Classification (IPC):
**G06N 20/00** (2019.01)   **G06N 3/091** (2023.01)
**G06N 3/0455** (2023.01)

(52) Cooperative Patent Classification (CPC):
**G06N 20/00;** G06N 3/0455; G06N 3/091

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Bayerische Motoren Werke
Aktiengesellschaft
80809 München (DE)**

(72) Inventors:
• **Schmidt, Sebastian
81925 München (DE)**
• **Hemachandran Rani, Shyam Shankar
81369 München (DE)**

(54) **ACTIVE LEARNING BASED ON CONFUSION MATRIX CALIBRATED UNCERTAINTY FOR OBJECT CLASSIFICATION IN VISUAL PERCEPTION TASKS IN A VEHICLE**

(57)   The present invention relates to enabling active learning for object classification in visual perception tasks in a vehicle. To this end, an object class out of a plurality of object classes is determined for one or more data points within automotive sensor data. Further, an uncertainty value for each of the one or more data points within the automotive sensor data based on a plurality of class probabilities and a confusion matrix is determined. Based on the determined uncertainty values, an overall uncertainty of the automotive sensor data is determined. Then, the automotive sensor data 210 are provided to an oracle if the overall uncertainty exceeds an overall uncertainty threshold. Finally, an object annotation of the automotive sensor data is received from the oracle.

Fig. 2A

**Description**

TECHNICAL FIELD

The invention generally relates to active learning and more precisely to active learning in the context of perception tasks in vehicles configured to provide at least partial driving automation.

BACKGROUND

To enable at least partial driving automation, a vehicle needs to accurately perform automotive perception tasks, such as object classification, object detection or semantic segmentation. These perception tasks are usually performed by machine learning algorithms, which need to be trained on large datasets and may be further improved even once the vehicle is deployed in traffic. One way of ensuring accurate performance of automotive perception tasks by the machine learning algorithms is to train the machine learning algorithms with large, labeled datasets, i.e. datasets which indicate the outcome of the respective automotive perception task. However, since such labeling may be performed manually, large, labeled datasets to train machine learning algorithms for at least partial driving automation may be costly to generate. To overcome this issue, active learning may be used, i.e. a given machine learning algorithm may be inferenced on unlabeled data and may request that a subset of the unlabeled data be labeled based on active learning criteria. However, the active learning criteria need to generally be determined in a way which improves a given machine learning algorithm and in the context of at least partial driving automation need to enable achieving the level of accuracy of a machine learning algorithm required for of at least partial driving automation.

It is therefore an objective of the present disclosure to provide active learning criteria which enable the training and improvement of a machine learning algorithm configured to perform an automotive perception task in a manner ensuring the accuracy required for at least partial driving automation.

SUMMARY OF THE INVENTION

To achieve this objective, the present disclosure provides a method configured to enable active learning for object classification in visual perception tasks in a vehicle configured to provide at least partial driving automation based on the object classification. The method comprises determining, using an object classifier, for one or more data points within automotive sensor data, an object class out of a plurality of object classes. Each object class corresponds to an object type encounterable in a driving environment of the vehicle. The method further comprises determining, for each of the one or more data points within the automotive sensor data, an uncertainty value based on a plurality of class probabilities and a confusion matrix. Each uncertainty value is indicative of an uncertainty of the object class determination. Each class probability is indicative, for each of the one or more data points, of the probability of each data point being indicative of a corresponding object class. The confusion matrix is indicative, for each object class of the plurality of object classes, of a probability of the object classifier determining, for a given object class, each of the object classes of the plurality of object classes. The method further comprises determining an overall uncertainty of the automotive sensor data based on the uncertainty values of the one or more data points. The method further comprises providing the automotive sensor data to an oracle if the overall uncertainty exceeds an overall uncertainty threshold. Finally, the method comprises receiving, from the oracle, an object annotation of the automotive sensor data.

The present disclosure further provides an automotive control unit. The automotive control unit comprises at least one processing unit and a memory coupled to the at least one processing unit and configured to store machine-readable instructions. The machine-readable instructions cause the at least one processing unit to determine, using an object classifier, for one or more data points within automotive sensor data, an object class out of a plurality of object classes. Each object class corresponds to an object type encounterable in a driving environment of the vehicle. The machine-readable instructions further cause the at least one processing unit to determine, for the one or more data points within the automotive sensor data, an uncertainty value based on a plurality of class probabilities and a confusion matrix. Each uncertainty value is indicative of an uncertainty of the object class determination. Each class probability is indicative, for each of the one or more data points, of the probability of each data point belonging to a corresponding object class. The confusion matrix is indicative, for each object class of the plurality of object classes, of a probability of the object classifier determining, for a given object class, each of the object classes of the plurality of object classes. The machine-readable instructions further cause the at least one processing unit to determine an overall uncertainty of the automotive sensor data based on the uncertainty values of the one or more data points. The machine-readable instructions further cause the at least one processing unit to provide the automotive sensor data to an oracle if the overall uncertainty exceeds an overall uncertainty threshold. Finally, The machine-readable instructions further cause the at least one processing unit to receive, from the oracle, an object annotation of the automotive sensor data.

The present disclosure further provides a vehicle comprising the automotive control unit.

BRIEF DESCRIPTION OF THE DRAWINGS

Examples of the present disclosure will be described with reference to the following appended drawings, in which like reference signs refer to like elements.

Fig. 1 shows a flowchart of a method configured to enable active learning for object classification in visual perception tasks in a vehicle configured to provide at least partial driving automation based on the object classification according to examples of the present disclosure.

Figs. 2A and 2B illustrate the processing of automotive sensor data in accordance with the method of Fig. 1 according to examples of the present disclosure.

Fig. 3 illustrates a vehicle according to examples of the present disclosure.

Fig. 4 illustrates an automotive control unit according to examples of the present disclosure.

It should be understood that the above-identified drawings are in no way meant to limit the present disclosure. Rather, these drawings are provided to assist in understanding the present disclosure. The person skilled in the art will readily understand that aspects of the present invention shown in one drawing may be combined with aspects in another drawing or may be omitted without departing from the scope of the present disclosure.

DETAILED DESCRIPTION

The present disclosure generally provides a method configured to enable active learning for object classification in visual perception tasks in a vehicle configured to provide at least partial driving automation based on the object classification. In addition, the present disclosure generally provides an automotive control unit configured to execute instructions implementing said method and a vehicle including said automotive control unit.

Typically, a vehicle is equipped with various automotive sensors providing automotive sensor data indicative of a driving environment of the vehicle. In order to infer objects from the automotive sensors, the vehicle is configured to identify objects within the automotive sensor data. The identified objects are then used by advanced driver assistance systems (ADAS) to control longitudinal and lateral motion of the vehicle. In order to safely identify and to thereby safely enable longitudinal and lateral control of the vehicle, the vehicle employs object detection and classification within the automotive sensor data which has been trained on labeled data. However, given the effectively innumerable number of visual appearances of objects in the driving environment of the vehicle, labeled training data cannot cover all potential visual appearances of a given object, such as a pedestrian or other vulnerable road user (VRU).

To account for the fact that training data may never cover all possible visual appearances of objects encounterable in the driving environment of the vehicle, the present disclosure proposes an active learning approach for object classification in vehicles, which decides based on uncertainty values, which have been calibrated using a confusion matrix, whether to request an oracle to annotate the automotive sensor data. Based on this annotation, the accuracy of the object detection and classification performed by the vehicle and thus the safety of the longitudinal and lateral control of the vehicle by one or more ADASs may be improved.

Uncertainty in the context of the present disclosure refers to the uncertainty of the object classification performed by the vehicle regarding the classification of objects within the automotive sensor data. In other words, the uncertainty of an object classifier indicates how probable it is that the classification of an object within the automotive sensor data as being indicative of a specific object type may be wrong. To this end, the vehicle is configured to determine an uncertainty of an object classification of one or more data points within the automotive sensor data, e.g. based on a Dirichlet distribution. In addition, the uncertainty determination proposed by the present disclosure is rendered more accurate by calibrating, i.e. determining, the uncertainty values based on a confusion matrix. A confusion matrix indicates, for a given object classifier, the probability of the object classifier classifying an object, which belongs to a given object class, as belonging to any one of the object classes, which the object classifier is capable of identifying. To provide an example, if an object classifier is capable of identifying five object classes, the confusion matrix includes five columns and five rows, with each column identifying how often an expected object class has been identified. That is, each column indicates the probability that the expected object class has been identified and the probability that each of the other four classes has been identified.

The accordingly determined uncertainty values are then used to determine an overall uncertainty of the automotive sensor data, which may e.g. be determined based on various averaging approaches or by selecting the highest uncertainty value out of the determined uncertainty values.

If the overall uncertainty exceeds an overall uncertainty threshold, the automotive sensor data are provided to the oracle for annotation, i.e. for identification, by the oracle, of the object classes of the one or more data points within the automotive sensor data. The accordingly annotated patches are received by the vehicle and used by the vehicle to improve the object detection and classification and to thereby improve the safety of the longitudinal and lateral control by the one or more ADAS of the vehicle.

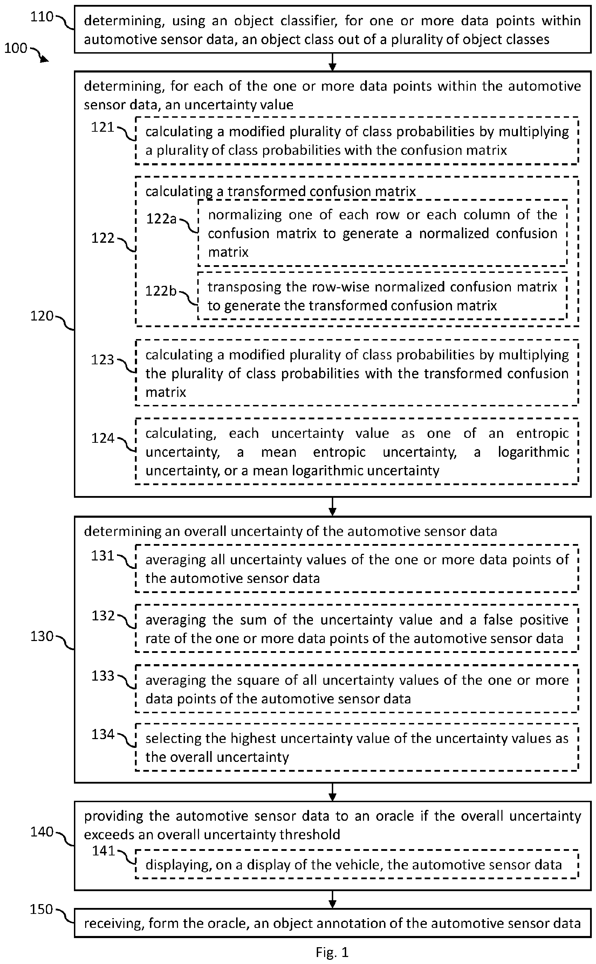

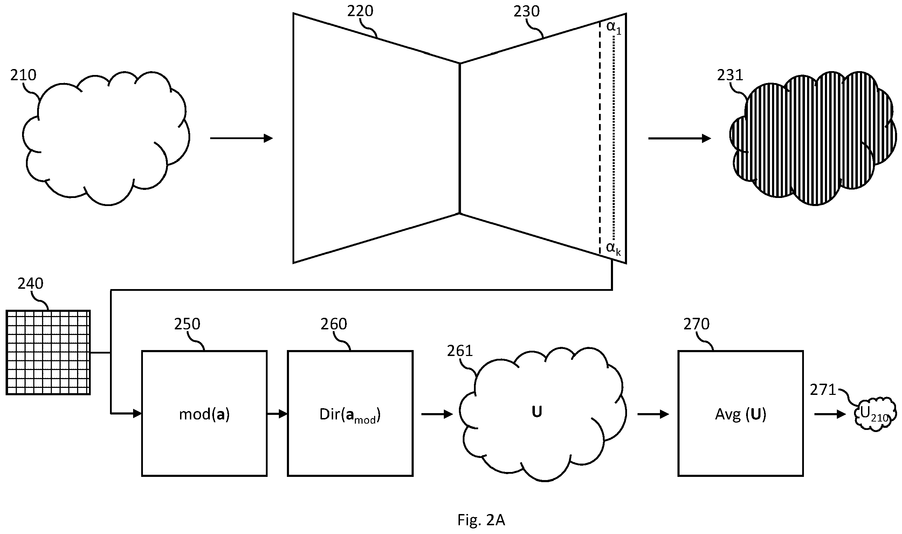

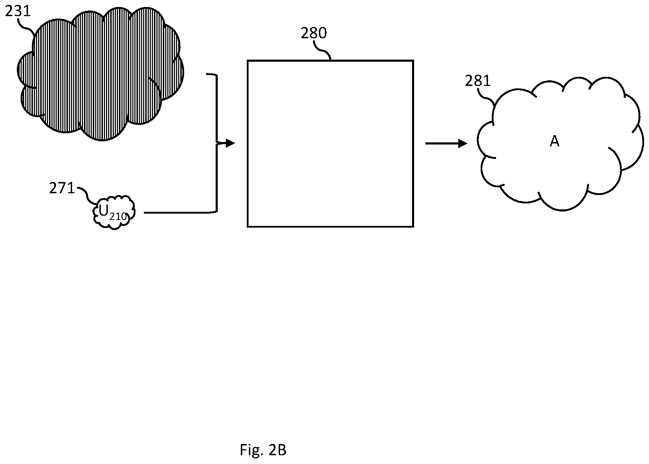

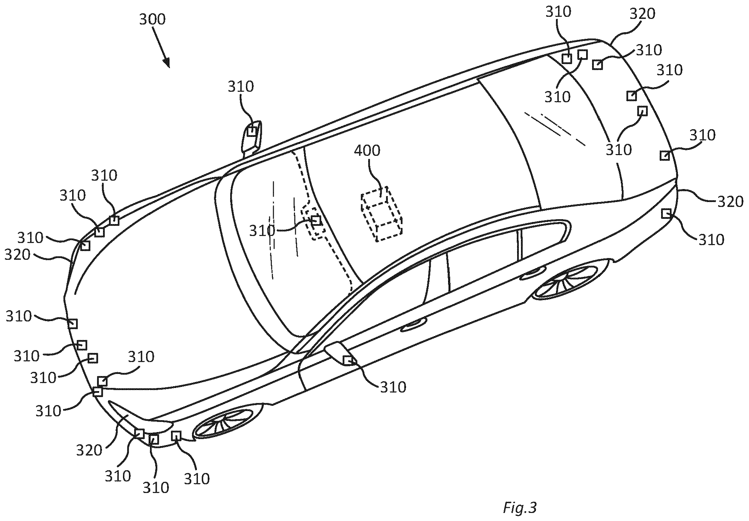

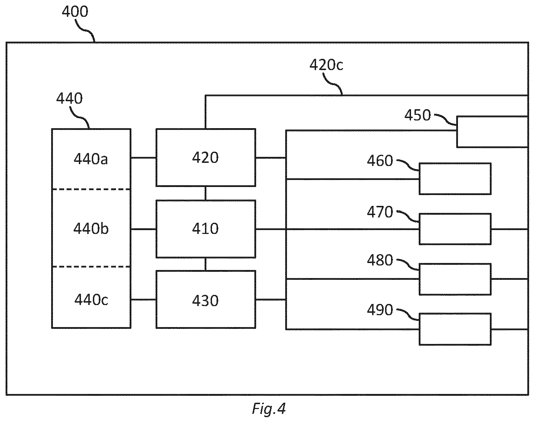

This general concept will be explained with reference to the appended drawings, with Fig. 1 providing a flowchart of a method 100 configured to enable active learning for object classification in visual perception tasks in a vehicle configured to provide at least partial driving automation and Fig. 2 illustrating the processing of automotive sensor data in accordance with the method of Fig. 1. In addition, Fig. 3 illustrates a vehicle according to the present disclosure and Fig. 4 illustrates an automotive controller configured to perform method 100.

It will be understood that dashed boxes in Fig. 1 illustrate optional steps of method 100.

Method 100 is configured to enable active learning for object classification in visual perception tasks in a vehicle, such as vehicle 300 of Fig. 3, configured to provide at least partial driving automation.

Vehicle 200 in the context of the present disclosure refers to any kind of motor vehicle configured to transport people and/or cargo. The motor of vehicle 300 may be any kind of motor, such as an electric motor or an internal combustion engine. Vehicle 300 may e.g. be a passenger vehicle. It will however be understood that the vehicle 300 may also be a bus, a truck or any other kind of vehicle including one or more sensors 310 and an automotive control unit 400 enabling vehicle 200 to provide at least partial driving automation. That is, automotive control unit 400 and one or more sensors 310 are configured to enable at least partial driving automation, i.e. level 2 as defined in standard J3016 of SAE International. Accordingly, method 100 enables improving the accurate performance of object classification in visual perception tasks within automotive control unit 400 in order to increase safe control of the longitudinal motion and the lateral motion of vehicle 300. It will be understood that method 100, automotive control unit 400 and one or more sensors 310 may enable higher levels of automation, e.g. up to and including level 5 as defined in standard J3016 of SAE International.

The one or more sensors 310 may be configured to capture automotive sensor data indicative of a driving environment of vehicle 300, which may provide the environmental awareness enabling at least partial driving automation. For example, the one or more sensors 310 may provide vehicle 300 with information on the position and size of other vehicles or with information regarding road surface markings, which are extracted from the automotive sensor data based on the object classification performed by the machine learning algorithm. To this end, the one or more sensors 310 may be radar sensors, which may be configured to emit radio waves in order to determine a distance, an angle and a velocity of objects around the vehicle based on the reflected radio waves. The one or more sensors 310 may be light detection and ranging (LIDAR) sensors, which are configured to emit laser beams in order to determine a distance, an angle and a velocity of objects around vehicle 300 based on the reflected laser beams. The one or more sensors 310 may be cameras, which capture images of the environment of the vehicle. The one or more sensors 310 may be thermographic cameras, which capture images of the environment of vehicle 300 based on infrared radiation. It will be understood that LIDAR sensors, radar sensors or cameras are merely provided as examples of sensor types of the one or more sensors 310. For example, the one or more sensors 310 may also be ultrasonic sensors. More generally, the one or more sensors 310 may be any type of sensor capable of capturing sensor data indicative of the environment of vehicle 300. It will further be understood that the one or more sensors 310 may include multiple sensors of various types of sensors. Further, the one or more sensors 310 of the same type may exhibit different properties, e.g. by being configured to capture sensor data at different ranges, such as a close range, a middle range and a far range. For example, vehicle 300 may include three close range radar sensors each at a front and a back of vehicle 300, a middle range to far range radar sensor at the back of vehicle 300, a LIDAR sensor at the front of vehicle 300, a rear-facing camera at the back of vehicle 300, a front-facing camera at the front of the vehicle, a front-facing camera at the rear-view mirror and a rear-facing close range to middle range radar sensor in each door-mounted outer rear view mirror. It will be understood that vehicle 300 may include more or fewer automotive sensors than shown in Fig. 3 and discussed in the above example.

It will be understood that automotive sensor data in the sense of the present application may be any kind of data, such as an image frame, a data cloud or any other type of data structure suitable to include data from automotive sensors 310 and to thereby convey information indicative of the driving environment of vehicle 300. To illustrate this fact, automotive sensor data is illustrated as automotive sensor data 210 in the form of a cloud in Figs. 2A and 2B. Single data elements within automotive sensor data 210 will be referred to throughout this disclosure as data points and may e.g. be pixels in the example of automotive sensor data 210 being a frame.

Automotive control unit 400 will be discussed in more detail below with regard to Fig. 4.

In the context of the present disclosure, visual perception task refers to any kind of task identifying one or more object classes within automotive sensor data 210 captured by the one or more sensors 310. The visual perception task may for example identify within automotive sensor data provided by a camera included in vehicle 300 whether vehicle 300 is located on a controlled-access highway, a limited-access road, an arterial road, a local road or a parking lot. In this case, the one or more object classes correspond to the type of road on which vehicle 300 may be located. Further, the visual perception task may for example identify within automotive sensor data provided by a LIDAR sensor and multiple cameras included in vehicle 200 other vehicles and the type of vehicle, road surface markings and the type of road surface marking, road signs and the type of road sign, vulnerable road users (VRUs) as well as traffic lights and the indication state of the traffic light. Accordingly, the object classes of the plurality of object classes may correspond to any possible road user, road traffic control device and road surface marking as well as any other type of element encounterable in the driving environment of the vehicle 200 relevant for enabling at least partial driving automation. More generally, the visual perception task may thus be any perception task determining the class of objects in the vicinity of vehicle 200, with the objects referring to both a determination of the general environment of vehicle 200 as well as a determination of individual elements in the vicinity of vehicle 200. In this context, it will accordingly be understood that object classification in the context of the present disclosure may identify the classes of multiple objects within automotive sensor data 210 and is not limited to the identification of a single object class within automotive sensor data 210.

In the context of the visual perception task, active learning is thus to be understood in the context of the present disclosure to refer to an object classifier, which performs at least a part of the visual perception task requesting an oracle to label the automotive sensor data, i.e. to determine one or more object classes within the automotive sensor data.

The object classifier may be any kind of machine learning algorithm which has been trained based on training automotive sensor data to classify objects in the driving environment of the vehicle, i.e. which has been trained to perform a visual perception task as defined above. Training automotive sensor data may be unlabeled, partially labeled or fully labeled. In other words, the training automotive sensor data may include the corresponding object classes in addition to the automotive sensor data. However, given the active learning functionality discussed above and described in detail below, the training automotive sensor data need not be fully labeled. The machine learning algorithm may be a feature extractor configured to extract objects from the automotive sensor data and to determine the object class of the extracted objects. To this end, the machine learning algorithm may e.g. be an artificial neural network (ANN), an autoencoder or a data clustering algorithm. For example, if the object classifier is implemented as a neural network configured to perform at least the determination of object classes, a plurality of activation levels of an output layer of the neural network may correspond to a plurality of class probabilities.

It will be understood that a class probability in the context of the present disclosure indicates for a given data point of the automotive sensor data the probability of the given data point being indicative of a corresponding object class. Taking an object classifier configured to identify 100 different object classes as an example, the plurality of class probabilities in this example includes 100 class probabilities with each class probability indicating, for a given data point, the probability of the given data point being indicative of each of the 100 classes. It will be understood that the object classifier may be able to identify any number of classes, such as 10,000 or 10, depending on the type of object classification the object classifier is designed to perform within the context of the visual perception task and the at least partial driving control of vehicle 300. Based on the highest probability out of the plurality of class probabilities, the object classifier may determine the given data point as being indicative of the object class corresponding to the highest class probability.

As illustrated in Fig. 2A, the object classifier may be implemented as an autoencoder including an object classification encoder 220 and an object classification decoder 230, which together are configured to detect, for one or more data points within the automotive sensor data 210, one or more object classes 231. In Fig. 2A object classes 231 are illustrated as a data cloud similar in shape to automotive sensor data 210 in order to illustrate that the object classes determined within automotive sensor data can be considered attached to their corresponding data points within automotive sensor data.

More precisely, object classification encoder 220 may be configured to generate a latent space. The latent space may include all activation values of all neurons of the output layer of shared encoder 220, which corresponds to the bottleneck of the autoencoder. Object class decoder 230 may be configured to determine for one or more data points within automotive sensor data 210 a corresponding object class 231 based on the latent space. Object class decoder 230 may determine the corresponding object class 231 for one or more data points within automotive sensor data 210 based on the highest class probability within the plurality of class probabilities as discussed above.

In step 110, method 100 determines for one or more data points within automotive sensor data 210 an object class 231 out of the plurality of object classes. In other words, method 100 determines for one or more data points within automotive sensor data 210 a corresponding object class 231. The processing performed by step 110 is performed by the object classifier discussed above and is illustrated in Fig. 2A by object class encoder 220 and object class decoder 230 one or more object classes 231 within automotive sensor data 210.

In step 120, method 100 determines for each of the one or more data points within automotive sensor data 210 an uncertainty value 261. Each uncertainty value 261 is indicative of an uncertainty of the object class determination, i.e. the object classification performed by the object classifier. Accordingly, method 100 determines an uncertainty value 261 for each object class 231 determined in step 110.

Each uncertainty value is based on the plurality of class probabilities discussed above. Since the plurality of class probabilities indicates how likely it is that a given data point within automotive sensor data 210 is indicative of each of the object classes determinable by the object classifier, the class probabilities corresponding to the object classes not identified as being indicated by the given data point may be used as a measure of the uncertainty of the object classification. Based on this fact, various probability analysis approaches may be used. However, In the context of the present disclosure, the plurality of class probabilities is considered in conjunction with the confusion matrix, i.e. the determination of the uncertainty values in step 120 is based on both the plurality of class probabilities and the confusion matrix. Accordingly, before performing any of the various probability analysis approaches to determine the one or more uncertainty values 261, the plurality of class probabilities and the confusion matrix are processed, as part of step 120.

As briefly discussed above, confusion matrix 240 is indicative, for each object class of the plurality of object classes, of a probability of the object classifier determining, for a given object class, each of the object classes of the plurality of object classes. Taking an object classifier capable of identifying three different object classes within automotive sensor data 210 as an example, the confusion matrix may be expressed as shown in equation (1):

$$M = \begin{pmatrix} p_{11} & p_{12} & p_{13} \\ p_{21} & p_{22} & p_{23} \\ p_{31} & p_{31} & p_{33} \end{pmatrix} \qquad (1)$$

In equation (1), M denotes the confusion matrix and $p_{11}$ to $p_{33}$ denote the probability that for a given automotive sensor data input indicative of a given object class 231 one of the three object classes 231 is identified. Each column corresponds to a given automotive sensor data input indicative of a given object class 231. That is, the first column indicates that the input received by the object classifier is indicative of the first object class 231, the second column indicates that the input received by the object classifier is indicative of the second object class 231 and the third column indicates that the input received by the object classifier is indicative of the third object class 231. Each row indicates the actually determined object class for a given input. Taking probability $p_{31}$ as an example, probability $p_{31}$ indicates that the object classifier has determined the third object class 231 for an input indicative of the first object class 231. Accordingly, the first number of each index of the probabilities included in confusion matrix indicates the index of the determined object class and the second number of each index of the probabilities included in confusion matrix indicates the index of the actual object class. It follows from this fact that the probabilities on the diagonal of confusion matrix 240 denote the probabilities that the object classifier correctly determines an object class for a given input. The probabilities outside of the diagonal of the confusion matrix thus indicate the probabilities of a wrong determination of a given object class. The confusion matrix thus indicates the general probabilities of the object classifier, i.e. object classification decoder 230, of making correct and wrong determinations of the object classes 231 within automotive sensor data 210. By contrast the class probabilities indicate for each data point the probability that a given data point within automotive sensor data 210 is indicative of a given object class 231.

The confusion matrix may be determined with labeled training data after the training of the object classifier. That is, the confusion matrix may be determined after the training of the object classifier in order to determine how often the object classifier correctly and incorrectly determines object classes 231 within automotive sensor data 210.

It will be understood that the confusion matrix may include probabilities, as discussed above, or absolute values indicative of the probabilities. That is, assuming as an example that the object classifier is provided with 50 labeled automotive sensor data sets for each of the three example classes discussed above, each entry may indicate how many of these 50 labeled sets were determined as being indicative of a given object class 231 with each column summing up to 50.

Method 100 uses the plurality of class probabilities and confusion matrix 240 in step 120 in order to determine uncertainty values 261 for one or more of the data points within automotive sensor data 210. To this end, step 120 may include step 121 or steps 122 and 123 in order to determine a basis on which uncertainty values 261 may be determined.

In step 121, method 100 may calculate a modified plurality of class probabilities by multiplying the plurality of class probabilities with confusion matrix 240. That is, the modified plurality of class probabilities as calculated in step 121 may be indicative of the combined probability of a given data point being indicative of each of the object classes 231 and the probability of the object classifier determining any of the object classes 231 when provided with automotive sensor data 210 indicative of one of the object classes 231. The calculation performed in step 121 may be expressed as shown in equation (2).

$$\tilde{\alpha} = \alpha * M \qquad (2)$$

In equation (2), $\tilde{\alpha}$ denotes the modified plurality of class probabilities, $\alpha$ denotes the plurality of class probabilities and **M** denotes the confusion matrix 240.

Alternatively, method 100 may calculate in step 122 a transposed confusion matrix. To this end, step 122 may comprise steps 122a and 122b. In step 122a, method 100 may normalize one of each row or each column of confusion matrix 240 to generate a normalized confusion matrix. That is, the probabilities in the normalized confusion matrix may be normalized either with regard to the provided input, i.e. column-wise, or with regard to the determined object class 231, i.e. row-wise. Both approaches lead to a more accurate uncertainty determination. In step 122b, method 100 may transpose the normalized confusion matrix to generate the transposed confusion matrix. The transposed confusion matrix may lead to a more balanced weighting of the normalized probabilities. Following the calculation of the transposed confusion matrix, method 100 may, in step 123 calculate the modified plurality of class probabilities $\tilde{\alpha}$ by multiplying the plurality of class probabilities with the transposed confusion matrix $\mathbf{M^T}$, as shown in equation (3).

$$\tilde{\boldsymbol{\alpha}} = \boldsymbol{\alpha} * \boldsymbol{M}^T \qquad (3)$$

As discussed above, various probability analysis approaches may be used to determine uncertainty values 261 in step 120 of method 100. For example, the plurality of class probabilities as well as the modified plurality of class probabilities may be considered to correspond to concentration parameters of a Dirichlet distribution Dir($\alpha$). Accordingly, based on the modified plurality of class probabilities of the one or more data points within automotive sensor data 210, each uncertainty value 261 may be calculated based on the corresponding Dirichlet distribution, as shown in equation (4):

$$U_{mean} = \frac{C}{\sum_{k=1}^{C} \tilde{a}_k} \qquad (4)$$

In equation (4), $U_{mean}$ denotes uncertainty value 261 as an average uncertainty, C denotes the number of classes the object classifier is configured to identify and $\alpha_{\tilde{k}}$ denotes a concentration parameter of the Dirichlet Distribution, i.e. the modified class probabilities.

In addition to the uncertainty calculation of equation (4), method 100 may as part of step 120 also determine the uncertainty values 261 in other ways. To this end, step 120 may further include a step 124, in which method 100 may calculate, based on the modified plurality of class probabilities, each uncertainty value (261) as one of an entropic uncertainty, a mean entropic uncertainty, a logarithmic uncertainty, or a mean logarithmic uncertainty.

Entropic uncertainty may be calculated as shown in equation (5):

$$U_{ent} = H(a) = \sum_{k=1}^{C} \frac{\tilde{a}_k}{\tilde{a}_0} * \log \frac{\tilde{a}_k}{\tilde{a}_0} \qquad (5)$$

In equation (5), in addition to the previously introduced parameters, $U_{ent}$ and H(a) denote the entropic uncertainty.

Mean entropic uncertainty may be calculated as shown in equation (6):

$$U_{mean\_ent} = U_{mean} \times U_{ent} \qquad (6)$$

Accordingly, mean entropic uncertainty corresponds to the multiplication of entropic uncertainty and average uncertainty.

Logarithmic uncertainty may be calculated as shown in equation (7):

$$U_{log\_ent} = \log(H_{max}(K)) - \log(H_{max}(K) - U_{ent}) \qquad (7)$$

In other words, Logarithmic uncertainty may be calculated based on the maximum entropic uncertainty calculated based on the sum in equation (5).

Finally, mean logarithmic uncertainty may be calculated as shown in equation (8):

$$U_{mean\_log\_ent} = U_{mean} \times U_{\log\_ent} \qquad (8)$$

In Fig. 2A, the exemplary determination of the uncertainty values 261 is illustrated by class probability modification 250 and Dirichlet distribution determination 260. Class probability modification 250 is labelled mod(a), and receives the activation values of the last layer of object detection decoder 230, i.e. the plurality of class probabilities of each of the one or more data points within automotive sensor data 210. That is, the plurality of class probabilities of each of the one or more data points within automotive sensor data 210 may, in some examples of the present disclosure, correspond to the activation values of the output layer of object detection decoder 230. Class probability modification 250 may perform any of steps 121 to 123, i.e. may be configured to generate the modified plurality of class probabilities. Dirichlet distribution determination 260 receives the modified plurality of class probabilities from class probability modification 250 and is configured to calculate the uncertainty values 261 as discussed above, e.g. by implementing step 124.

In step 130, method 100 determines an overall uncertainty $U_{210}$ of automotive sensor data 210 based on the uncertainty values 261 of the one or more data points determined in step 120. Overall uncertainty $U_{210}$ is indicative of the overall uncertainty of the determination of object classes 231 within automotive sensor data. To determine overall

uncertainty $U_{210}$ to reflect this overall uncertainty, method 100 may determine in one of the options of steps 131 to 134.

In step 131, method 100 may average all uncertainty values 261 of the one or more data points of the automotive sensor data 210, as shown in equation (9):

$$U_{210} = \frac{1}{D} * \sum_{i=1}^{D} U_{261,i} \qquad (9)$$

In equation (9), D denotes the number of data points.

In step 132, method 100 may average the sum of the uncertainty values 261 and a false positive rate of the one or more data points of the automotive sensor data 210. The false positive rate may correspond to a probability of a given object class 231 being wrongly determined for a given data point divided by the sum of the probability of the given object class 231 being wrongly determined for a given data point and a probability of the given object class 231 being correctly not determined. The false positive rate FPR may be expressed as in equation (10):

$$FPR = \frac{p_{falsely\_detected}}{p_{falsely\_detected} + p_{correctly\_not\_detected}} \qquad (10)$$

In equation (10) $p_{falsey\_detected}$ denotes the probability that a given object class 231 is detected even though a given data point within automotive sensor data 210 is not indicative of the given object class 231 and $p_{correcly\_not\_detected}$ denotes the probability that a given object class 231 is not detected and indeed no data point within automotive sensor data 210 is indicative of the given object class 231. Based on the false positive rate FPR, the overall uncertainty may be calculated in step 132 as shown in equation (11):

$$U_{210} = \frac{1}{D} * \sum_{i=1}^{D} U_{261,i} * FPR_i \qquad (11)$$

In step 132, method 100 may average the square of all uncertainty values 261 of the one or more data points of the automotive sensor data 210, as shown in equation (12).

$$U_{210} = \frac{1}{D} * \sum_{i=1}^{D} (U_{261,i})^2 \qquad (12)$$

Finally, in step 134 method 100 may selecting the highest uncertainty value 261 determined in step 120 as the overall uncertainty.

In step 140, method 100 provides the automotive sensor data 210 to oracle 280 if overall uncertainty $U_{210}$ exceeds an overall uncertainty threshold. The overall uncertainty threshold may correspond to a sum of an average overall uncertainty and at least one standard deviation of the average overall uncertainty. That is, method 100 may provide the automotive sensor data to oracle 280 if overall uncertainty $U_{210}$ of automotive sensor data 210 deviates by at least one standard deviation from an average overall uncertainty of the object determination performed by object detection decoder 230. Accordingly, automotive sensor data 210 are provided to oracle 280 only if automotive sensor data 210 are considered outliers in terms of a standard deviation.

Oracle 280 may be a cloud-based object classification service, such as a larger object classifier provided on a backend of a manufacturer of vehicle 300 or a large crowd-sourced database providing data-to-text conversion based on a large database of annotated data.

Oracle 280 may be a user of vehicle 300, in which case step 140 may include step 141. In step 141, method 100 may display to the driver on a display of vehicle 300 automotive sensor data 210.

Finally, in step 150, method 100 receives from the oracle 280 an object annotation 281 of the automotive sensor data That is, method 100 in step 150 receives automotive sensor data 210 with an indication which object class or potentially object classes are included in automotive sensor data 210. Method 100 then uses the one or more object annotations 281 in order to improve the object classifier and thereby the safety and accuracy of the at least partial driving control of vehicle 300.

Fig. 4 shows automotive control unit 400 configured to perform method 100. automotive control unit 400 may include a processor 410, a graphics processing unit (GPU) 420, automotive processing system 430, a memory 440, a removable storage 450, a storage 460, a cellular interface 470, a global navigation satellite system (GNSS) interface 480 and a communication interface 490.

Processor 410 may be any kind of single-core or multi-core processing unit employing a reduced instruction set (RISC) or a complex instruction set (CISC). Exemplary RISC processing units include ARM based cores or RISC V based cores. Exemplary CISC processing units include x86 based cores or x86-64 based cores. Processor 410 may perform instructions causing automotive control unit 400 to perform method 100. Processor 410 may be directly coupled to any of the components of computing device 400 or may be directly coupled to memory 430, GPU 420 and a device bus.

GPU 420 may be any kind of processing unit optimized for processing graphics related instructions or more generally for parallel processing of instructions. As such, GPU 420 may be configured to generate a display of information, such as ADAS information or telemetry data, to a driver of the vehicle, e.g. via a head-up display (HUD) or a display arranged within the view of the driver. GPU 420 may be coupled to the HUD and/or the display via connection 420C. GPU 420 may further perform at least a part of method 100 to enable fast parallel processing of instructions relating to method 300. It should be noted that in some embodiments, processor 410 may determine that GPU 320 need not perform instructions relating to method 100. GPU 420 may be directly coupled to any of the components of automotive control unit 400 or may be directly coupled to processor 410 and memory 430. In some embodiments, GPU 420 may also be coupled to the device bus.

Automotive processing system 430 may be any kind of system-on chip configured to provide trillions of operations per second (TOPS) in order to enable automotive control unit 300 to implement one or more ADAS while driving. Automotive processing system 430 may only interface with processor 410 or may interface with other devices via the system bus. Automotive processing system 430 may for example execute instructions relating to shared encoder 220, instance decoder 230 and object class decoder 240.

Memory 440 may be any kind of fast storage enabling processor 410, GPU 420 and automotive processing system 430 to store instructions for fast retrieval during processing of instructions as well as to cache and buffer data. Memory 440 may be a unified memory coupled to processor 410 and GPU 420 and automotive processing system 430 in order to enable allocation of memory 440 to processor 410, GPU 420 and automotive processing system 430 as needed. Alternatively, processor 410, GPU 420 and automotive processing system 430 may be coupled to separate processor memory 440a, GPU memory 440b and automotive processing system memory 440c.

Removable storage 450 may be a storage device which can be removably coupled with automotive control unit 400. Examples include a digital versatile disc (DVD), a compact disc (CD), a Universal Serial Bus (USB) storage device, such as an external SSD, or a magnetic tape. It should be noted that removable storage 350 may store data, such as instructions of method 100 and/or automotive sensor data 210, or may be omitted.

Storage 460 may be a storage device enabling storage of program instructions and other data. For example, storage 460 may be a hard disk drive (HDD), a solid state disk (SSD) or some other type of non-volatile memory. Storage 460 may for example store the instructions of method 100.

Removable Storage 450 and storage 460 may be coupled to processor 410 via the system bus. The system bus may be any kind of bus system enabling processor 410 and optionally GPU 420 as well as automotive processing system 430 to communicate with the other devices of automotive control unit 400. The system bus may for example be a Peripheral Component Interconnect express (PCIe) bus or a Serial AT Attachment (SATA) bus.

Cellular interface 470 may be any kind of interface enabling automotive control unit 400 to communicate via a cellular network, such as a 4G network or a 5G network.

GNSS interface 480 may be any kind of interface enabling automotive control unit 300 to receive position data provided by a satellite network, such as the Global Positioning System (GPS), the Global Navigation Satellite System (GLONASS) or Galileo.

Communications interface 490 may enable computing device 400 to interface with external devices, either directly or via network, via connection 380C. Communications interface 380 may for example enable computing device 300 to couple to a wired or wireless network, such as Ethernet, Wifi, a Controller Area Network (CAN) bus or any bus system appropriate in vehicles. For example, automotive control unit 400 may be coupled to the one or more sensors 310 to receive information about the environment of vehicle 300 in order to classify objects in the vicinity of vehicle 300. Communications interface 490 may also include a USB port or a serial port to enable direct communication with an external device.

Automotive control unit 400 may be integrated with the vehicle, e.g. beneath the cabin, under the dashboard or in the trunk of vehicle 400.

The invention may further be illustrated by the following examples.

In an example, a method is configured to enable active learning for object classification in visual perception tasks in a vehicle configured to provide at least partial driving automation based on the object classification. The example method comprises determining, using an object classifier, for one or more data points within automotive sensor data, an object class out of a plurality of object classes. Each object class corresponds to an object type encounterable in a driving environment of the vehicle. The example method further comprises determining, for each of the one or more data points within the automotive sensor data, an uncertainty value based on a plurality of class probabilities and a confusion matrix. Each uncertainty value is indicative of an uncertainty of the object class determination. Each class probability is indicative, for each of the one or more data points, of the probability of each data point being indicative of a corresponding object class. The confusion matrix is indicative, for each object class of the plurality of object classes, of a probability of the object classifier determining, for a given object class, each of the object classes of the plurality of object classes. The example method further comprises determining an overall uncertainty of the automotive sensor data based on the uncertainty values of the one or more data points. The example method further comprises providing the automotive sensor data to an oracle if the overall uncertainty exceeds an overall uncertainty threshold. Finally, the example method comprises receiving, from the oracle, an object annotation of the automotive sensor data.

In the example method, the overall uncertainty threshold may correspond to a sum of an average overall uncertainty and at least one standard deviation of the average overall uncertainty.

In the example method, the plurality of class probabilities may correspond to a plurality of activation values of an output layer of the object classifier.

In the example method, the plurality of class probabilities may correspond to concentration parameters of a Dirichlet distribution.

In the example method, the determining the uncertainty value for each of the one or more data points may include calculating a modified plurality of class probabilities by multiplying the plurality of class probabilities with the confusion matrix.

In the example method, the determining the uncertainty value for each of the one or more data points may include calculating a transposed confusion matrix. The calculation of the transposed confusion matrix may comprise normalizing one of each row or each column of the confusion matrix to generate a normalized confusion matrix and transposing the normalized confusion matrix to generate the transposed confusion matrix. Based on the transposed confusion matrix, the determining the uncertainty value may further comprise calculating a modified plurality of class probabilities by multiplying the plurality of class probabilities with the transposed confusion matrix.

In the example method, the determining the uncertainty value for each of the one or more data points may further include calculating, based on the modified plurality of class probabilities, each uncertainty value as one of an entropic uncertainty, a mean entropic uncertainty, a logarithmic uncertainty, or a mean logarithmic uncertainty.

In the example method, the determining the overall uncertainty of the automotive sensor data may include one of averaging all uncertainty values of the one or more data points of the automotive sensor data; averaging the sum of the uncertainty value and a false positive rate of the one or more data points of the automotive sensor data, wherein the false positive rate may correspond to a probability of a given object class being wrongly determined for a given data point divided by the sum of the probability of the given object class being wrongly determined for a given data point and a probability of the given object class being correctly not determined, averaging the square of all uncertainty values of the one or more data points of the automotive sensor data or selecting the highest uncertainty value of the uncertainty values as the overall uncertainty.

In the example method, the oracle may be a cloud-based object classification service.

In the example method, the oracle may be a user of the vehicle, and providing the automotive sensor data to the oracle may include displaying, on a display of the vehicle, the automotive sensor data.

In an example, an automotive control unit comprises at least one processing unit and a memory coupled to the at least one processing unit and configured to store exemplary machine-readable instructions. The exemplary machine-readable instructions cause the at least one processing unit to determine, using an object classifier, for one or more data points within automotive sensor data, an object class out of a plurality of object classes. Each object class corresponds to an object type encounterable in a driving environment of the vehicle. The exemplary machine-readable instructions further cause the at least one processing unit to determine, for the one or more data points within the automotive sensor data, an uncertainty value based on a plurality of class probabilities and a confusion matrix. Each uncertainty value is indicative of an uncertainty of the object class determination. Each class probability is indicative, for each of the one or more data points, of the probability of each data point belonging to a corresponding object class. The confusion matrix is indicative, for each object class of the plurality of object classes, of a probability of the object classifier determining, for a given object class, each of the object classes of the plurality of object classes. The exemplary machine-readable instructions further cause the at least one processing unit to determine an overall uncertainty of the automotive sensor data based on the uncertainty values of the one or more data points. The exemplary machine-readable instructions further cause the at least one processing unit to provide the automotive sensor data to an oracle if the overall uncertainty exceeds an overall uncertainty threshold. Finally, The exemplary machine-readable instructions further cause the at least one processing unit to receive,from the oracle, an object annotation of the automotive sensor data.

In the example automotive control unit, the machine-readable instructions may further cause the at least one processing unit to perform the method of any one of the above example methods.

In an example, a vehicle comprises the automotive control unit of any one of the above example automotive control units.

The preceding description has been provided to illustrate enabling active learning based on confusion matrix calibrated uncertainty for object classification in visual perception tasks in a vehicle. It should be understood that the description is in no way meant to limit the scope of the present disclosure to the precise embodiments discussed throughout the description. Rather, the person skilled in the art will be aware that the examples of the present disclosure may be combined, modified or condensed without departing from the scope of the present disclosure as defined by the following claims.

List of Reference Signs

| 100-150 | method and method steps |
|---|---|
| 210 | automotive sensor data |
| 220 | object classification encoder |
| 230 | object classification decoder |
| 231 | object class |
| 240 | confusion matrix |
| 250 | class probability modification |
| 260 | Dirichlet distribution determination |
| 261 | uncertainty value |
| 270 | overall uncertainty estimation |
| 271 | overall uncertainty |
| 280 | oracle |
| 281 | object annotation |
| 300 | vehicle |
| 310 | automotive sensor |
| 320 | light |
| 400 | automotive control unit |
| 410 | CPU |
| 420 | GPU |
| 420c | connection |
| 430 | automotive processing system |
| 440 | memory |
| 450 | removable storage |
| 460 | storage |
| 470 | cellular interface |
| 480 | GNSS interface |
| 490 | communications interface |
| $\alpha_1$-$\alpha_k$ | class probability |

**Claims**

1. Method (100) configured to enable active learning for object classification in visual perception tasks in a vehicle (300) configured to provide at least partial driving automation based on the object classification, comprising:

determining (110), using an object classifier, for one or more data points within automotive sensor data (210), an object class (231) out of a plurality of object classes, each object class (231) corresponding to an object type encounterable in a driving environment of the vehicle (300);
determining (120), for each of the one or more data points within the automotive sensor data (210), an uncertainty value (261) based on a plurality of class probabilities ($\alpha_1$-$\alpha_k$) and a confusion matrix (240), wherein:

each uncertainty value (261) is indicative of an uncertainty of the object class determination,
each class probability ($\alpha_1$-$\alpha_k$) is indicative, for each of the one or more data points, of the probability of each data point being indicative of a corresponding object class (241), and
the confusion matrix (240) is indicative, for each object class (231) of the plurality of object classes, of a probability of the object classifier determining, for a given object class (231), each of the object classes (231) of the plurality of object classes,

determining (130) an overall uncertainty ($U_{210}$) of the automotive sensor data (210) based on the uncertainty values (261) of the one or more data points;
providing (140) the automotive sensor data (210) to an oracle (280) if the overall uncertainty ($U_{210}$) exceeds an overall uncertainty threshold; and

receiving (150), from the oracle (280), an object annotation (281) of the automotive sensor data (210).

2. The method (100) of claim 1, wherein the overall uncertainty threshold corresponds to a sum of an average overall uncertainty and at least one standard deviation of the average overall uncertainty.

3. The method (100) of any one of the preceding claims, wherein the plurality of class probabilities corresponds to a plurality of activation values of an output layer of the object classifier.

4. The method (100) of any one of the preceding claims, wherein the plurality of class probabilities corresponds to concentration parameters of a Dirichlet distribution.

5. The method (100) of any one of the preceding claims, wherein the determining the uncertainty value (261) for each of the one or more data points includes calculating (121) a modified plurality of class probabilities by multiplying the plurality of class probabilities with the confusion matrix (240).

6. The method (100) of any one of claims 1 to 4, wherein the determining the uncertainty value (261) for each of the one or more data points includes:

   calculating (122) a transposed confusion matrix, comprising:

   normalizing (122a) one of each row or each column of the confusion matrix (240) to generate a normalized confusion matrix; and
   transposing (122b) the normalized confusion matrix to generate the transposed confusion matrix; and

   calculating (123) a modified plurality of class probabilities by multiplying the plurality of class probabilities with the transposed confusion matrix.

7. The method (100) of any one of claims 5 or 6, wherein the determining (120) the uncertainty value (261) for each of the one or more data points further includes calculating (124), based on the modified plurality of class probabilities, each uncertainty value (261) as one of:

   an entropic uncertainty,
   a mean entropic uncertainty,
   a logarithmic uncertainty, or
   a mean logarithmic uncertainty.

8. The method (100) of any one of the preceding claims, wherein the determining (130) the overall uncertainty ($U_{261}$) of the automotive sensor data (210) includes one of:

   averaging (131) all uncertainty values (261) of the one or more data points of the automotive sensor data (210),
   averaging (132) the sum of the uncertainty value (261) and a false positive rate of the one or more data points of the automotive sensor data (210), wherein the false positive rate corresponds to a probability of a given object class (231) being wrongly determined for a given data point divided by the sum of the probability of the given object class (231) being wrongly determined for a given data point and a probability of the given object class (231) being correctly not determined,
   averaging (133) the square of all uncertainty values (261) of the one or more data points of the automotive sensor data (210), or
   selecting (134) the highest uncertainty value (261) of the uncertainty values (261) as the overall uncertainty.

9. The method (100) of any one of the preceding claims, wherein the oracle (280) is a cloud-based object classification service.

10. The method (100) of any one of the preceding claims, wherein:

   the oracle (280) is a user of the vehicle (300), and
   providing (140) the automotive sensor data to the oracle includes displaying (141), on a display of the vehicle (300), the automotive sensor data (210).

11. An automotive control unit (400), comprising:

at least one processing unit (410); and
a memory (440, 450, 460) coupled to the at least one processing unit (410) and configured to store machine-readable instructions, wherein the machine-readable instructions cause the at least one processing unit (410) to:

determine, using an object classifier, for one or more data points within automotive sensor data (210), an object class (231) out of a plurality of object classes, each object class (231) corresponding to an object type encounterable in a driving environment of the vehicle (300);
determine, for each of the one or more data points within the automotive sensor data (210), an uncertainty value (261) based on a plurality of class probabilities ($\alpha_1$-$\alpha_k$) and a confusion matrix (240), wherein:

each uncertainty value (261) is indicative of an uncertainty of the object class determination,
each class probability ($\alpha_1$-$\alpha_k$) is indicative, for each of the one or more data points, of the probability of each data point being indicative of a corresponding object class (241), and
the confusion matrix (240) is indicative, for each object class (231) of the plurality of object classes, of a probability of the object classifier determining, for a given object class (231), each of the object classes (231) of the plurality of object classes,

determine an overall uncertainty ($U_{210}$) of the automotive sensor data (210) based on the uncertainty values (261) of the one or more data points;
provide the automotive sensor data (210) to an oracle (280) if the overall uncertainty ($U_{210}$) exceeds an overall uncertainty threshold; and
receive, from the oracle (280), an object annotation (281) of the automotive sensor data (210).

12. The automotive control unit (400) of claim 13, wherein the machine-readable instructions further cause the at least one processing unit (410) to perform the method of any one of claims 2 to 10.

13. A vehicle (300) comprising the automotive control unit (400) of any one of claims 11 and 12.

110 — determining, using an object classifier, for one or more data points within automotive sensor data, an object class out of a plurality of object classes

100

120 — determining, for each of the one or more data points within the automotive sensor data, an uncertainty value

121 — calculating a modified plurality of class probabilities by multiplying a plurality of class probabilities with the confusion matrix

122 — calculating a transformed confusion matrix

122a — normalizing one of each row or each column of the confusion matrix to generate a normalized confusion matrix

122b — transposing the row-wise normalized confusion matrix to generate the transformed confusion matrix

123 — calculating a modified plurality of class probabilities by multiplying the plurality of class probabilities with the transformed confusion matrix

124 — calculating, each uncertainty value as one of an entropic uncertainty, a mean entropic uncertainty, a logarithmic uncertainty, or a mean logarithmic uncertainty

130 — determining an overall uncertainty of the automotive sensor data

131 — averaging all uncertainty values of the one or more data points of the automotive sensor data

132 — averaging the sum of the uncertainty value and a false positive rate of the one or more data points of the automotive sensor data

133 — averaging the square of all uncertainty values of the one or more data points of the automotive sensor data

134 — selecting the highest uncertainty value of the uncertainty values as the overall uncertainty

140 — providing the automotive sensor data to an oracle if the overall uncertainty exceeds an overall uncertainty threshold

141 — displaying, on a display of the vehicle, the automotive sensor data

150 — receiving, form the oracle, an object annotation of the automotive sensor data

Fig. 1

Fig. 2A

Fig. 2B

Fig.3

Fig.4

**Europäisches Patentamt**
**European Patent Office**
**Office européen des brevets**

# EUROPEAN SEARCH REPORT

**Application Number**

EP 24 15 8249

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/205158 A1 (SZ DJI TECHNOLOGY CO LTD [CN]) 6 October 2022 (2022-10-06) * the whole document * | 1-13 | INV. G06N20/00 G06N3/091 G06N3/0455 |
| X | KASARLA TEJASWI ET AL: "Region-based active learning for efficient labeling in semantic segmentation", 2019 IEEE WINTER CONFERENCE ON APPLICATIONS OF COMPUTER VISION (WACV), IEEE, 7 January 2019 (2019-01-07), pages 1109-1117, XP033551326, DOI: 10.1109/WACV.2019.00123 [retrieved on 2019-03-04] * abstract * * Chapters 1-3; page 1109 - page 1112; figure 1 * | 1-13 | |
| A | CN 113 222 867 B (UNIV SHANDONG) 20 May 2022 (2022-05-20) * the whole document * | 1,5,6 | |
| A | MIXUE XIE ET AL: "Dirichlet-based Uncertainty Calibration for Active Domain Adaptation", ARXIV.ORG, CORNELL UNIVERSITY LIBRARY, 201 OLIN LIBRARY CORNELL UNIVERSITY ITHACA, NY 14853, 27 February 2023 (2023-02-27), XP091447442, * abstract * * Chapters 1-3; page 1 - page 7; figures 1, 2 * | 4 | |

**TECHNICAL FIELDS SEARCHED (IPC)**

G06N

The present search report has been drawn up for all claims

| Place of search | Date of completion of the search | Examiner |
|---|---|---|
| The Hague | 8 July 2024 | Hasnas, Sergiu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 8249

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2024

| Patent document cited in search report | Publication date | Patent family member(s) | Publication date |
|---|---|---|---|
| WO 2022205158 A1 | 06-10-2022 | NONE | |
| CN 113222867 B | 20-05-2022 | NONE | |

EPO FORM P0459

For more details about this annex : see Official Journal of the European Patent Office, No. 12/82